# EUROPEAN PATENT APPLICATION

(11) **EP 2 060 516 A1**
(43) Date of publication of application: **20.05.2009**
(21) Application number: 07120968.8
(22) Date of filing: 19.11.2007
(51) Int. Cl.: B65G 57/03, B65G 57/11

(54) **A method and an apparatus for stacking stackable objects**

(71) Applicant: Rockwool International A/S, 2640 Hedehusene (DK)
(72) Inventor: Kløverpris, Hans A., 6760 Ribe (DK)
(74) Representative: HOEIBERG A/S

(57) **Abstract**

The invention provides a method and an apparatus for stacking stackable objects, in particular stacking panels of fibrous insulation, such as mineral wool, said apparatus comprising:
- means for supplying stackable objects sequentially from conveyor means, said objects being supplied at a predetermined object supply velocity in an object movement direction;
- a delivery section conveyor having a conveyor surface having an inlet adapted to receiving the supplied objects and an outlet end at where the objects are delivered;
- a moveable stack building support member comprising a support surface and an end support substantially perpendicular to the stack support surface for building a stack of objects on the support surface;
- movement control means for reciprocating the moveable stack building support member in a predetermined stacking cycle, said stacking cycle comprising reciprocating the moveable stack building support member at least substantially in the direction of movement of the objects between a first position, which is an initial object receiving position where the support surface is at least partially underneath the delivery section so that the delivery section overlaps the support surface, to a second position, which is an object transferred position where the support surface and the at least one object thereon is clear of the delivery section. Hereby, there is provided a stacking method and apparatus which allows for a higher capacity in the stacking of objects supplied from the production line and thereby removes the necessity for having a plurality of stacking stations in order to match the stacking capacity with the output rate of the production line.

## Description

The present invention relates to a method and an apparatus for stacking stackable objects, wherein stackable objects are supplied sequentially on a conveyor.

In a production line where generally flat objects, such as insulation panels, for instance fibrous insulation slabs, are produced, these objects are stacked for packaging and shipment to the customer. This method of stacking may be performed by supplying the objects, e.g. fibrous insulation panels, from a manufacturing process on a conveyor onto a delivery section where transfer means lifts the objects from the conveyor onto a stacking support at the end of this delivery section, where the objects are placed one by one on top of each other in a stack. When the stack is of a predetermined size, the stack is removed from the delivery section to further processing, typically a packaging station.

The stacking support may be a pallet placed at the end of the delivery section and the flat objects are transferred onto the pallet by the transfer means, such as lifting forks, which are moved backwards and forwards to pick the objects from the conveyor one by one and place the objects on top of each other in a stack on the pallet.

In the production line of fibrous insulation panels or the like, the production capacity of the plant may be limited due to the stacking rate. Moreover, in a production line of fibrous insulation panels, such panels are produced in various sizes, including different thicknesses. The stacking and packaging equipment are adapted to handle panels of a particular size and it is time consuming to alter the stacking systems if insulation panels of another size are to be produced on the production line.

For these reasons, it is an object of the invention to provide a faster and more flexible method for stacking flat objects for such a production line as described above.

This object is achieved by a method for stacking stackable objects, in particular stacking panels of fibrous insulation, such as mineral wool, said method comprising the steps of:
- supplying stackable objects sequentially from conveyor means to a delivery section conveyor having a sloping conveyor surface, said objects being supplied at a predetermined object supply velocity in an object movement direction;
- transferring objects to a moveable stack building support member comprising a support surface and an end support substantially perpendicular to the stack support surface for building a stack of objects on the support surface;
- reciprocating the stack building support member at least substantially in the direction of movement of the objects between
   a) an initial object receiving position where the support surface is at least partially underneath the delivery section so that the delivery section overlaps the support surface, to
   b) an object transferred position where the support surface and the at least one object thereon is clear of the delivery section,
   whereby at least one object is received on the support surface at the initial object receiving position and then abuts the end support and whereby the stack building support member is moved away from the delivery section at a velocity substantially similar to the object supply velocity at least when the at least one object abuts the end section.

The invention also provides an apparatus for stacking stackable objects, in particular stacking panels of fibrous insulation, such as mineral wool, said apparatus comprising:
- means for supplying stackable objects sequentially from conveyor means, said objects being supplied at a predetermined object supply velocity in an object movement direction;
- a delivery section conveyor having an inclined conveyor surface having an inlet adapted to receiving the supplied objects and an outlet end at where the objects are delivered;
- a moveable stack building support member comprising a support surface and an end support substantially perpendicular to the stack support surface for building a stack of objects on the support surface,
- movement control means for reciprocating the moveable stack building support member in a predetermined stacking cycle, said stacking cycle comprising reciprocating the moveable stack building support member at least substantially in the direction of movement of the objects between a first position, which is an initial object receiving position where the support surface is at least partially underneath the delivery section so that the delivery section overlaps the support surface, to a second position, which is an object transferred position where the support surface and the at least one object thereon is clear of the delivery section.

According to the invention, there is provided a stacking method and apparatus which allows for a higher capacity in the stacking of objects supplied from the production line and thereby removes the necessity for having a plurality of stacking stations in order to match the stacking capacity with the output rate of the production line. The invention is moreover advantageous since the stacking apparatus often requires a smaller footprint in the manufacturing site than previous stacking systems since the apparatus according to the invention requires less space in order to provide the necessary capacity. The advantages are achieved by realising that the stack formation support may be moveable and that the movement control may be carried out by an industrial robot carrying the stack as it is being built.

Preferably, the at least one object is received on the support surface at the initial object receiving position and then at least prior to making contact with the end support the stack building support member is moved away from the delivery section at a velocity substantially similar to the object supply velocity at least when the at least one object makes contact with the end section. Hereby a smooth transfer of the panel from the conveyor to the top of the stack is achieved and the risk of damaging the panel edges is significantly reduced or even eliminated due to the low or no relative movement between the receiving stack building support and the arriving panel.

In a preferred embodiment, the inclined conveyor surface is inclined towards the outlet of the delivery section, preferably with an angular inclination below 60°, more preferably between 5° and 40°. By the inclination of the conveyor surface and since the support surface of the stacking member are aligned, it is ensured that the panels are transferred onwards to a predetermined position on the stacking support member, where the panels rests against the end support of the stacking support member due to the inclination. In one embodiment, the inclination angle is fixed. However, alternatively, the inclination angle is adjustable.

In the preferred embodiment, the stacking cycle further comprises that the stack building support member is lowered a predetermined distance after having finished receiving the at least one object in the object transferred position before being returned to the initial object receiving position. Hereby, the stacking cycle includes preparing the stacking process for receiving the next panel in the stack which is being built. In particular, said predetermined distance is preferably at least equal to the thickness of the objects to be stacked. If the production is shifted from panels with one thickness to panels having different thickness, it is easy to adjust the movement control and thereby the stacking cycle in a method and apparatus according to the invention.

Preferably, the movement control means further comprises means adapted for moving the stack building support member to a receiving station of a take-away conveyor for transporting the stacked objects to further processing, such as packaging. In particular, the stack building support member is preferably mounted on a robotic arm. Hereby, the stack may be provided onto the take-away conveyor in a predetermined orientation even if this involves turning the finished stack on the stack support member before delivering the stack on the receiving station. Besides providing such flexibility in relation to the delivery of the stack for further processing, the use of a robotic handling system also allows for having several options for delivery, including a dump, where a stack of panels either when finished or while it is being built can be discharged if imperfections are detected in relation to the panels.

In an embodiment of the invention, at least two stack building support members are provided so that a second stack building support member is provided in an active stack building object receiving position when the first building support member is moving a finished stack to further processing. Accordingly, the first stack building support member may be controlled by first movement control means including a first robotic arm and the second stack building support member may be controlled by second movement control means including a second robotic arm. In this embodiment, two or more independent stacking support members are in turn in an active stack building mode whereby the continuous supply of objects to the delivery section are attended to without interruptions. Moreover, an operational interruption in one of the robots due to e.g. maintenance can be compensated for by the one or more other robotic stack handling systems which are provided according to this embodiment of the invention.

In the preferred embodiment of the invention, the support surface is provided by a plurality of substantially parallel spaced apart support elongated members having an extension substantially in the object movement direction. Likewise, the delivery conveyor preferably comprises a plurality of substantially parallel spaced apart delivery conveyor belts, such as rubber belts. hereby, it is possible for the support surface and the delivery conveyor to be partially intermeshed and form a planar common surface for the smooth transfer of the first flat object for the formation of a new stack.

In a preferred embodiment, the object is assisted by reciprocating object transfer member adapted to support the object from the delivery section and intermediately supporting the object for a predetermined distance beyond the outlet end of the delivery section. Hereby, a higher capacity of the stacking apparatus is achievable since the required movement of the stacking support member thereby will be reduced as the transfer member meeting the stacking support member and assists it in the panel support during the transfer action.

In the following, the invention is described in more detail with reference to the accompanying drawings, in which:
- figures 1 to 4: are perspective views of an apparatus according to the invention performing the method according to a preferred embodiment of the invention in a production line, and
- figures 5 to 30: are schematic side views of the object transfer process and stacking according to the method according a preferred embodiment of the invention; and
- figures 31 and 32: are detailed perspective views of the delivery section during a transfer of an object corresponding to figures 12 and 13.

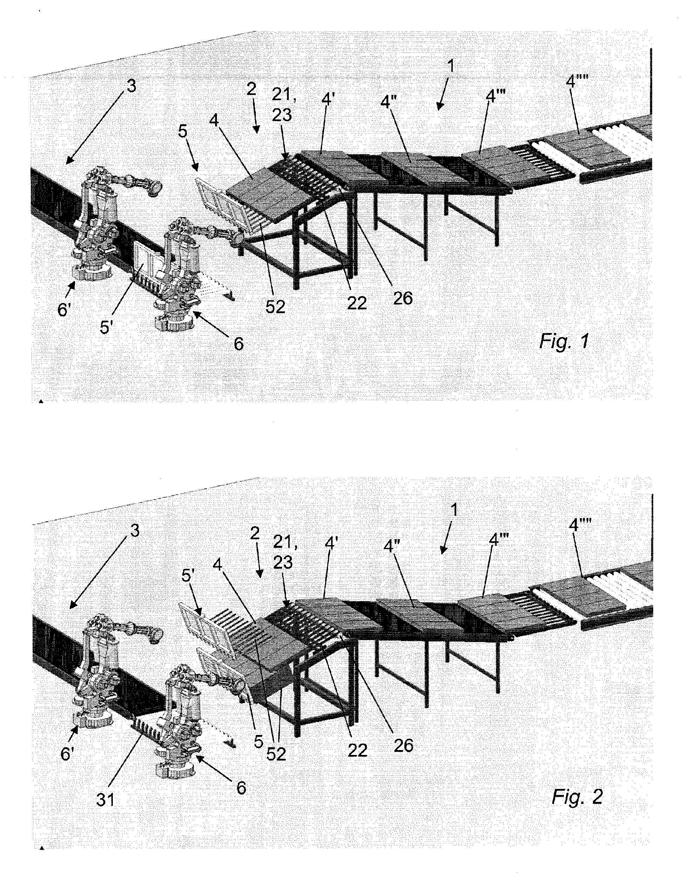

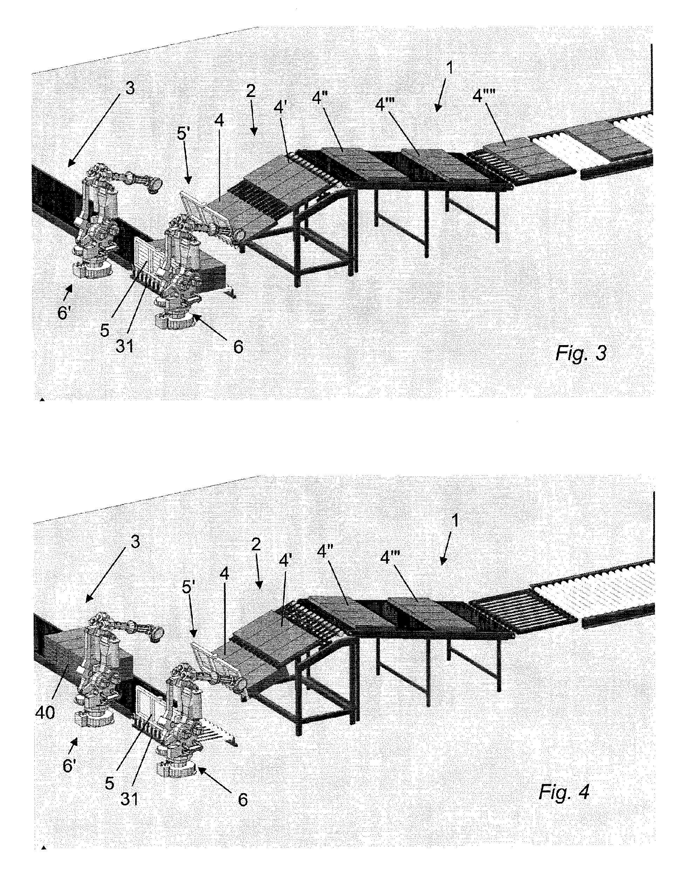

With reference to figures 1 to 4, there is shown a conveyor line 1 conveying fibrous insulation panels 4, 4', 4", 4"', 4"" from a production line (not shown) for the manufacture of such panels to a delivery section 2 from where the objects are stacked on a stacking support member 5, 5' provided on a robotic arm 6, 6' and transferred to take-away conveying means 3 where a stack of panels are transferred onwards to further processing, such as packaging, such as foil wrapping, etc.

The panels 4, 4', 4", 4"', 4"" are supplied to the delivery section 2 in a continuous flow. As the panels 4, 4', 4", 4"', 4"" exit the production plant they may be cut into sections, such as shown by the indicated slits in the figures 1 to 4, or supplied one by one to the delivery section. If the panels 4 are supplied with section cuts, these sections may be have either longitudinal section cuts, i.e. parallel to the direction of travel and/or perpendicular to the direction of travel.

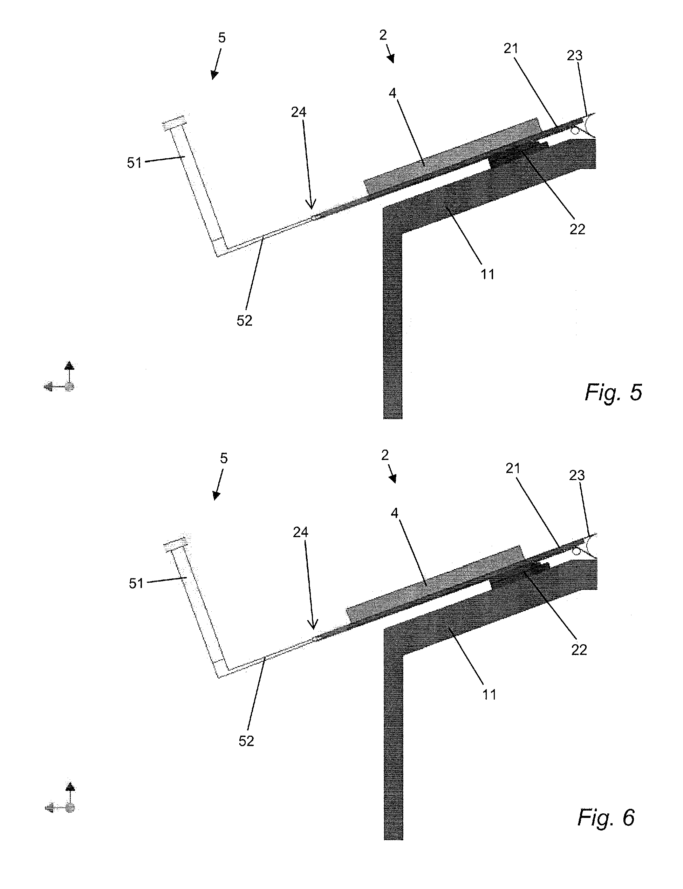

The panels 4 are transferred from the conveying line 1 to the delivery section 2 which is provided with an inclined upper surface 21 (see figures 5-30) and onwards to the stacking support member 5, where the panels 4 are received and stacked as they move beyond the delivery section 2.

The delivery section 2 is provided with a plurality of spaced apart conveyor belts 23 which are provided on a common drive shaft 26 to ensure the conveyor belt velocities of the individual belts 23 are equal. The conveyor belts 23 are preferably equally spaced apart with a predetermined first distance. The upper runs of these conveyor belts 23 form the inclined upper conveyor surface 21, which is sloping downwards towards the outlet end 24 of the delivery section 2 and towards the stacking support member 5.

The stacking support member 5 is provided on a robot 6 whereby a great degree of flexibility in its movement is achieved. The figures 1-4 are principle illustrations of the apparatus and are somewhat imprecise, as there is no illustration that the stacking support members 5, 5' and the associated robots 6, 6' are connected. However, it will be readily understood that the robotic arms naturally hold the stacking support members so that the movements of the stacking support members 5, 5' are provided by moving the robot arms. The stacking support member 5 is provided with a stacking support surface 52 which is preferably provided by a plurality of equally spaced apart support fingers which are spaced apart with a predetermined distance so that the stacking support surface fingers 52 are able to intermesh with the conveyor belts 23 on the delivery section 2. During stacking, the stacking support surface 52 is kept substantially parallel with the upper conveyor surface 21 of the delivery section 2 in order to ensure the smooth transfer of panels onto the stack and the stacking support member 5 is moved away from the delivery section as the panel is being transferred, so that when the panel meets the stacking support member 5, there is substantially no relative velocity between the panel and the stacking support member.

After the transfer of a panel and before the receipt of the next panel in the stack, the stacking support member 5 is moved perpendicularly to the support surface and thereby lowered so that the top surface of the stack becomes aligned for the receipt of the next panel.

When the stack is finished, the robotic arm 6 takes the stack support member 5 away from the delivery section 2 and places the stack on a take-away conveyor 3. This take-away conveyor 3 is preferably provided with a receiving section 31 which comprises a series of receiving fingers along its side so that the stack of panels may be swept off the stacking support member 5 as the robot moves the stack support member 5 passed this combed side of the receiving section 31, since the receiving fingers are spaced apart so that they intermesh with the spaced apart support fingers making up the stacking support surface 52 of the stack support member 5. This series of receiving fingers may be placed with regard to the preferred or required orientation of the stack in the further processing equipment downstream the take-away conveyor. Due to the flexibility of the robot, it is by the invention possible to deliver the stack on the take-away conveyor with any desired orientation, so that no stack turning stations or the like are required downstream.

In a preferred embodiment, a second robot 6' is provided handling a second stacking support member 5' so that the receipt and stacking of the continuous supply of panels 4 to the delivery section 2 is not interrupted while the first stacking support member 5 is delivering its finished stack on the take-away conveyor 3.

The panel transfer and the building of a stack on the stacking support member 5 according to the invention is explained in detail with reference to the schematic side views in the figures 5 to 30 illustrating the stack building process according to a preferred embodiment of the invention.

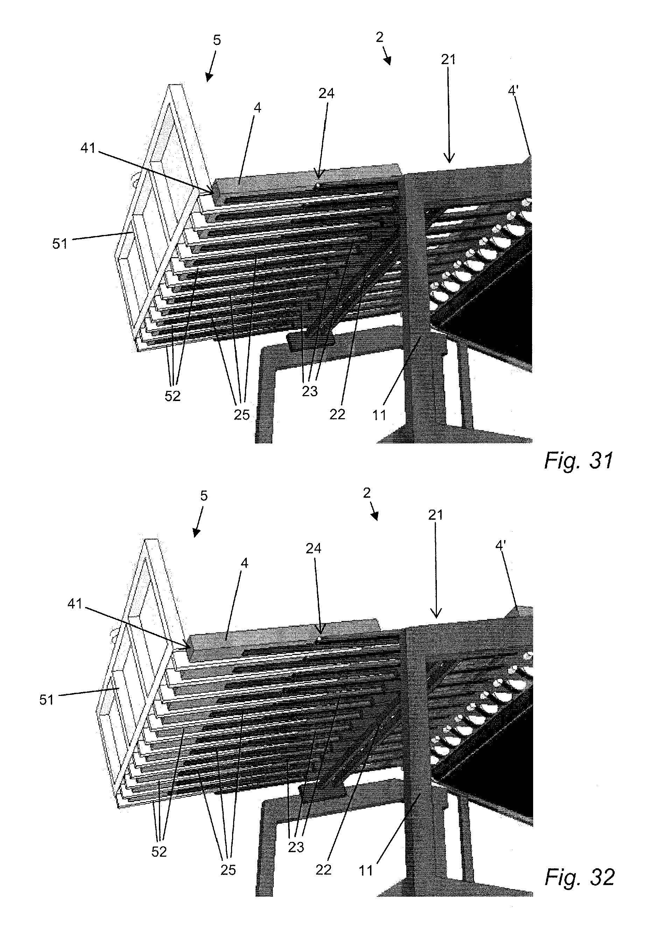

With reference to figs. 5 to 30, the delivery section 2 is arranged on a frame 11 and comprises an inclined conveyor surface 21 provided by a plurality of conveyor belts 23 on which a panel 4 is received and moved along this inclined conveyor surface 21 beyond the outlet end 24 of the delivery section and onto the stacking support member 5. The stacking support member 5 comprises a stacking support surface 52 and an end support 51 which is substantially perpendicular to the support surface 52. In a preferred embodiment of the invention a reciprocating object transfer member 22 is provided. This transfer member 22 is provided with support fingers 25 which are provided in the spaces between the conveyor belts 23 (see also figures 31 and 32) and follows the panel 4 from the delivery section 2 and intermediately supports the panel 4 for a predetermined distance beyond the outlet end 24 of the delivery section 2, as it will apparent from the sequence in the figures 5-30. The support fingers 25 are preferably provided so that they do not extend above the conveyor surface 21. Accordingly, the support fingers 25 are provided with a small distance below or in level with the conveyor surface 21. Alternatively, it is realised however that the support fingers 25 could be provided with a slight upwards movement whereby the top of the support fingers 25 protrude slightly up between the conveyor belts 23 to lift the panels, if this is desirable under the circumstances.

In figure 5, the stack building support is ready to start building a stack of panels. Accordingly, the stack building support 5 is positioned with the support surface 52 partially intermeshed and aligned with the conveyor surface 21 of the delivery section 2. The transfer member 22 is in its retracted position.

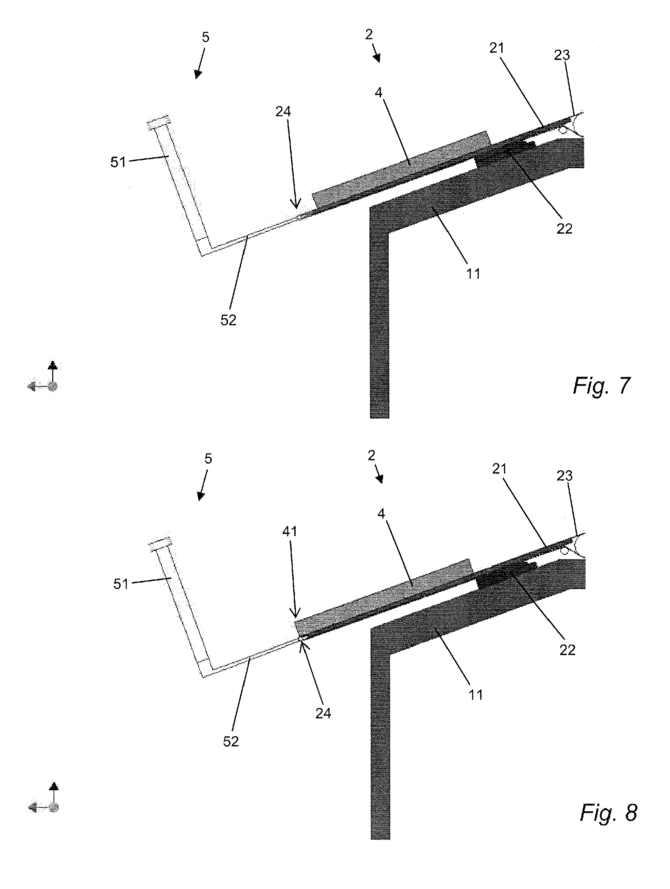

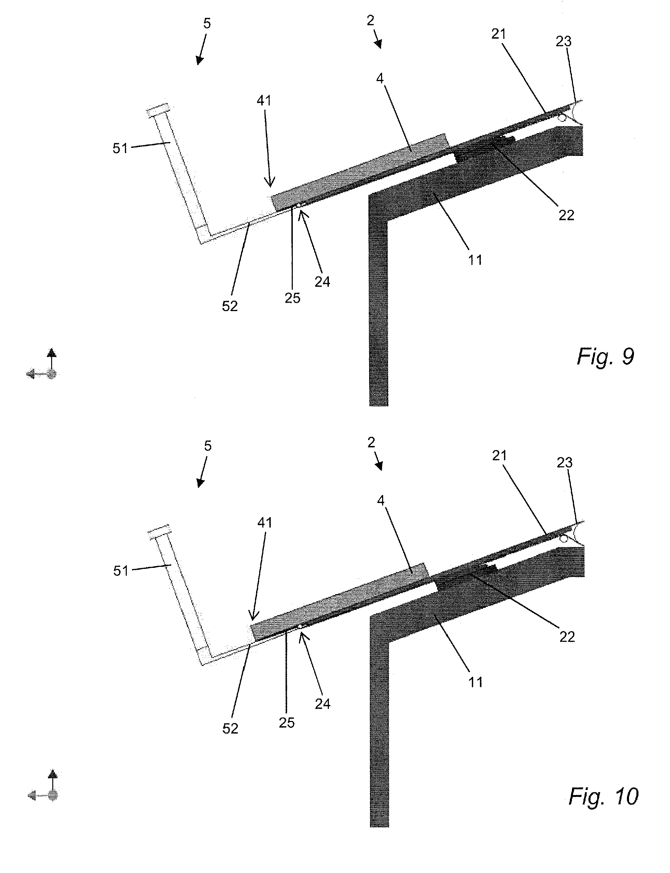

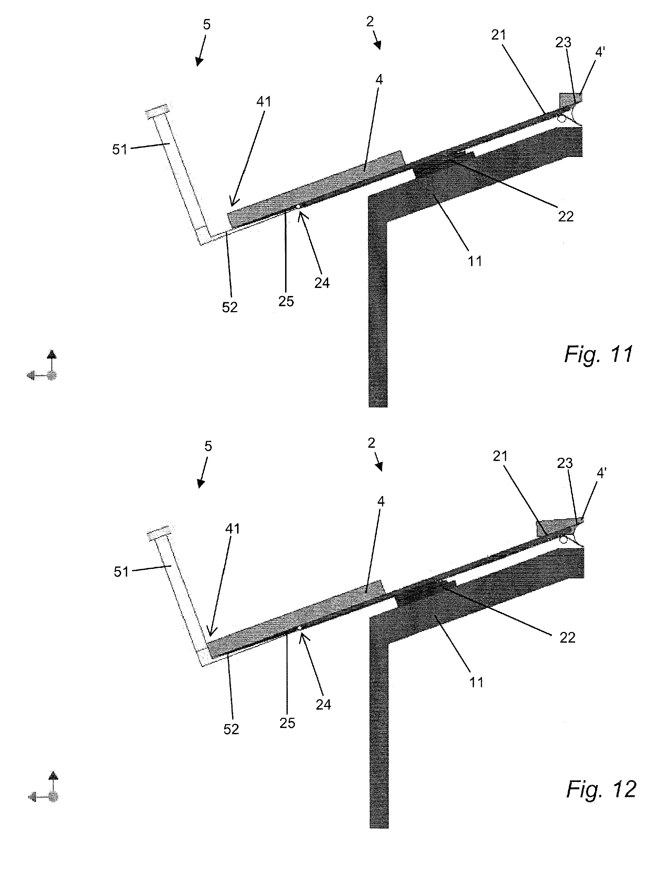

In figures 5 to 8, a panel 4 is moving along the sloping conveying surface 21 and the stacking support member 5 and the transfer member 22 are stationary. When the front end 41 of the panel 4 passes or is about to pass beyond the outlet end 24, as shown in fig. 8, the transfer member 22 starts moving forward so that its fingers 25 support at least the portion of the panel 4 which extends beyond the outlet end 24 of the conveyor surface 21 (see figures 9 to 11). As indicated in the top right corner of figures 11 and 12, the next panel 4' is entering the delivery section 2 when the first panel 4 is less than half way beyond the outlet end 24.

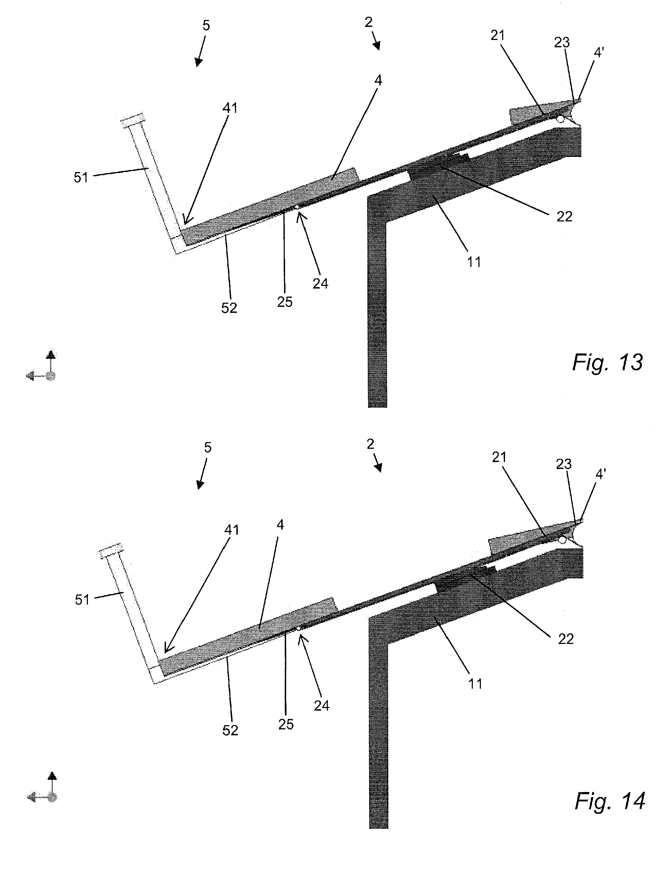

When the front end 41 of the panel 4 abuts or is about to abut the end support 51 of the stacking support member 5, as it is the case in fig. 12, the stacking support member 5 is starting to retract in the conveying plane and moves away from the delivery section 2, as shown in figures 13 to 15. Also shown in figs. 13 to 15, simultaneous with the stacking support member 5 moving away from the delivery section in the direction of travel of the panel, the transfer member 22 is moving towards its retracted position, i.e. removing the support fingers 25 from underneath the panel 4 as the fingers of the support surface 52 takes over the function of supporting the panel 4. For a more detailed illustration of the transfer member 22 and its support fingers 25, reference is made to figures 31 and 32.

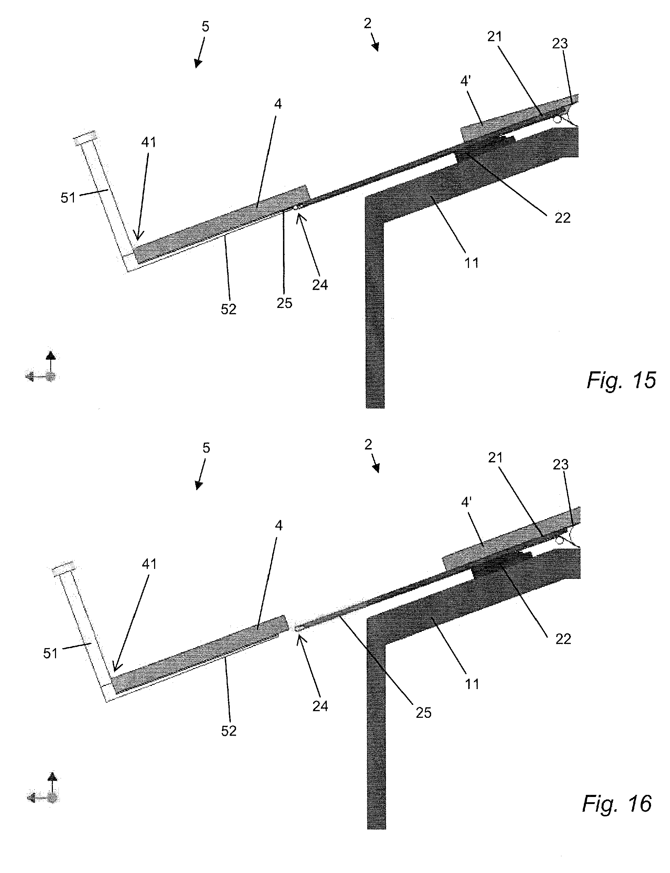

With reference to fig. 16, as the stacking support member 5 is moved sufficiently away from the outlet end 24 so the panel 4 is clear thereof, the transfer member 22 also reach its retracted position where its support fingers 25 are retracted so they do not extend beyond the outlet end 24.

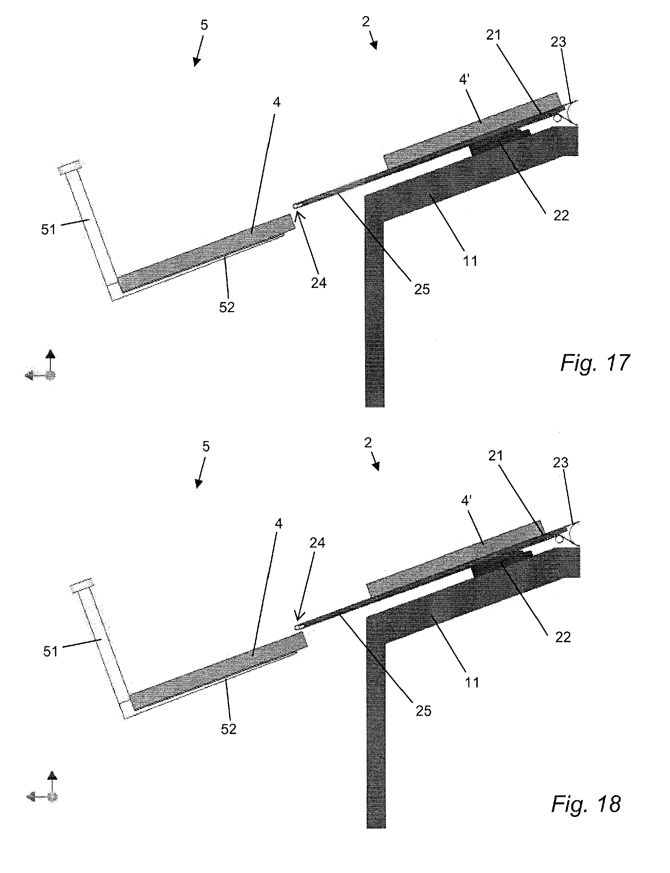

With reference to fig. 17, the transfer member 22 waits in its retracted position as the next panel 4' advances on the conveyor surface 21. Meanwhile the stacking support surface 5 is "lowered" a distance about at least the thickness of the panel 4 which has just been received thereon. By the term "lowered" is meant a movement in a direction perpendicular to the conveyor surface and perpendicular direction of travel of the panels 4 in the delivery section.

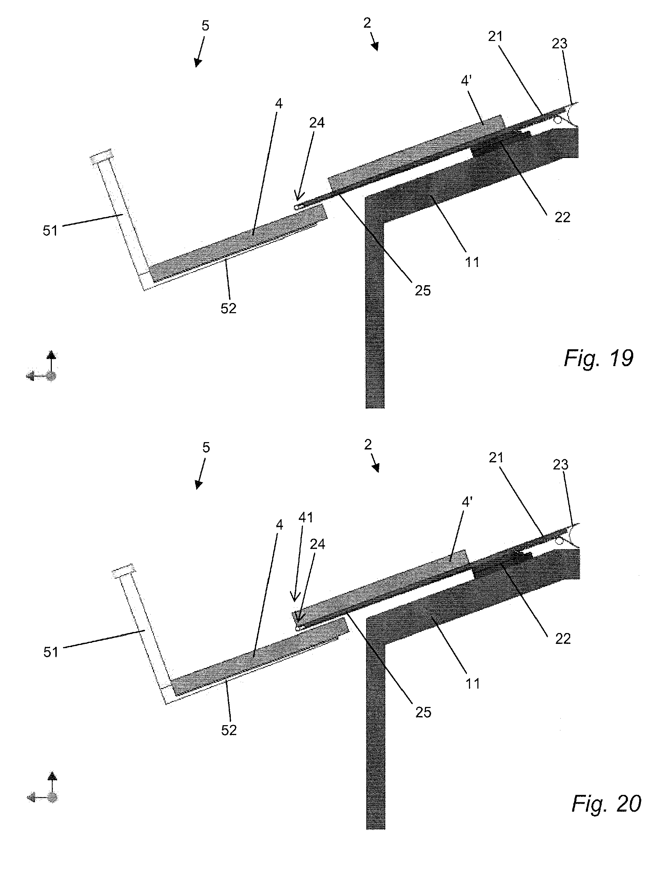

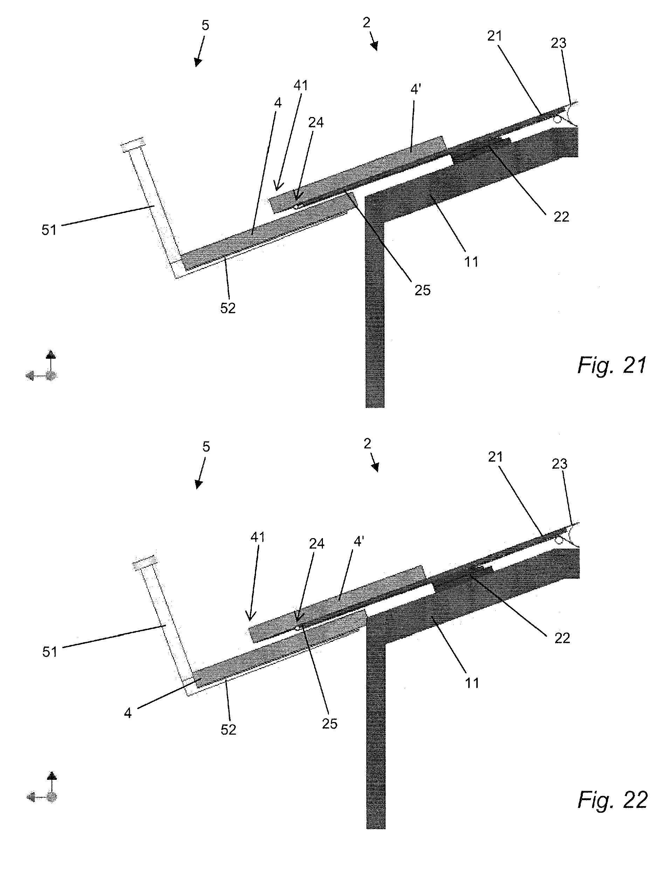

With reference to fig. 18, once the stacking support member 5 has been lowered, it is advanced in a direction opposite the direction of travel in the conveyor surface plane, as shown in the figures 18 to 24. With reference to figures 20 to 22, while the stacking support member 5 is being advanced to the position for receiving the next panel 4', this panel 4' is advancing on the inclined conveyor surface 21 and as the front end 41 of this next panel 4' reaches the outlet end 24, the transfer member 22 is starting its advancement again and the supporting fingers 25 thereof are extended in the plane of the conveyor surface 21 beyond the outlet end 24 together with the advancement of the panel 4' (see figs. 21-23).

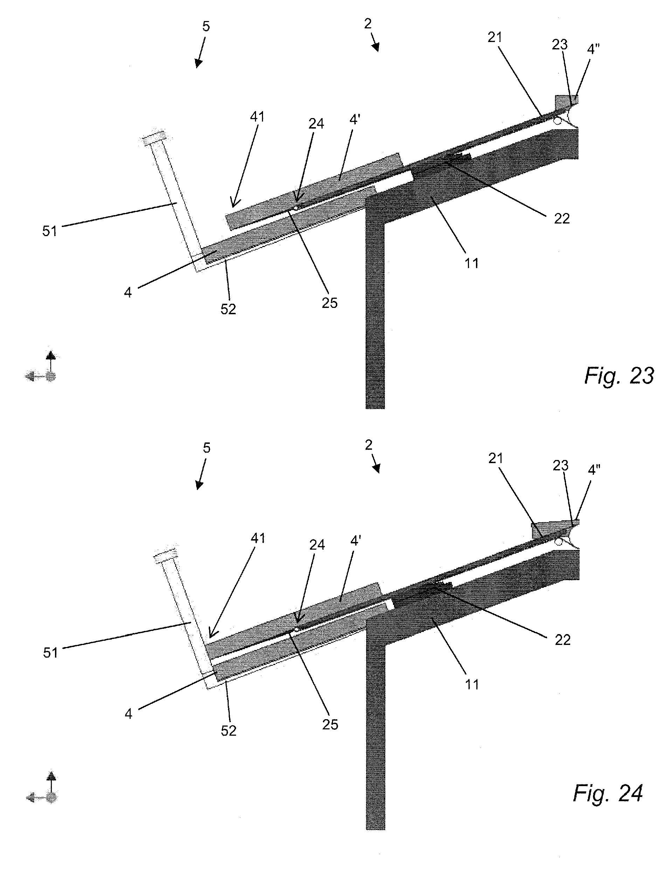

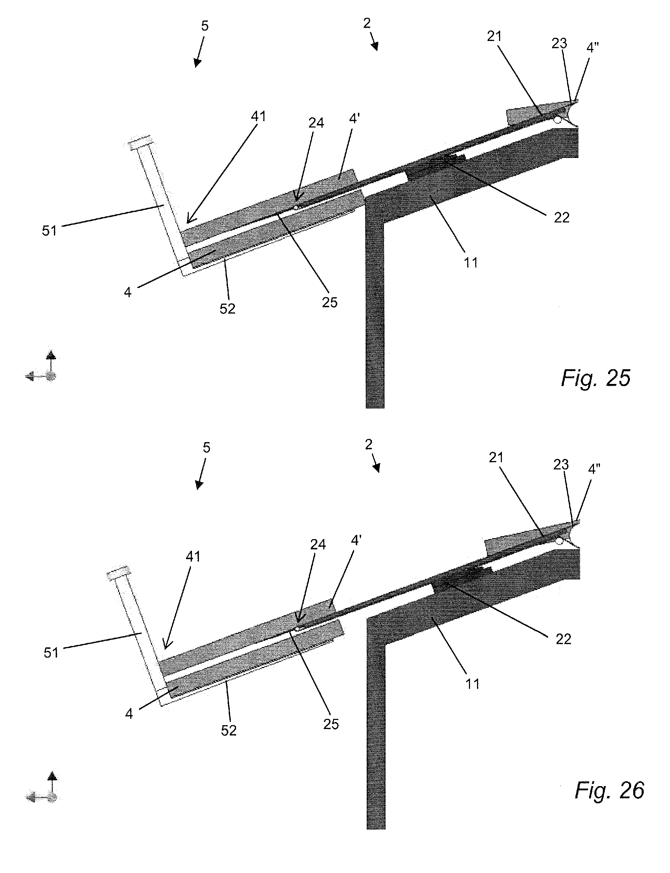

Immediately before or simultaneously with the front of the panel 4' abuts, i.e. makes contact or is about to make contact as shown in fig. 24, with the end support 51 of the stacking support member 5, the advancement of the stacking support member 5 is stopped and the stacking support member 5 begins to reverse back to its retracted position again, just as the transfer member 22 also starts to retract again. Hereby and with reference to figures 25 to 27, the support fingers 25 carrying at least a portion of the panel 4' are removed from underneath the panel 4' and the panel 4' will then be placed on top of the previous panel 4 in the stacking support member 5 in a gentle and predetermined position as the movements are so coordinated that substantially there is no relative velocity between the panel to be received and the already built stack.

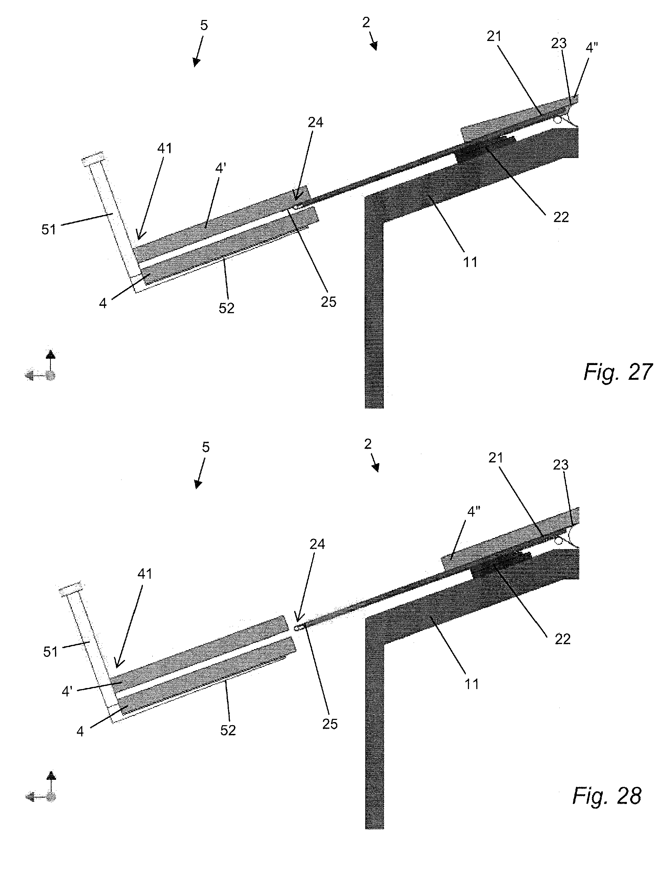

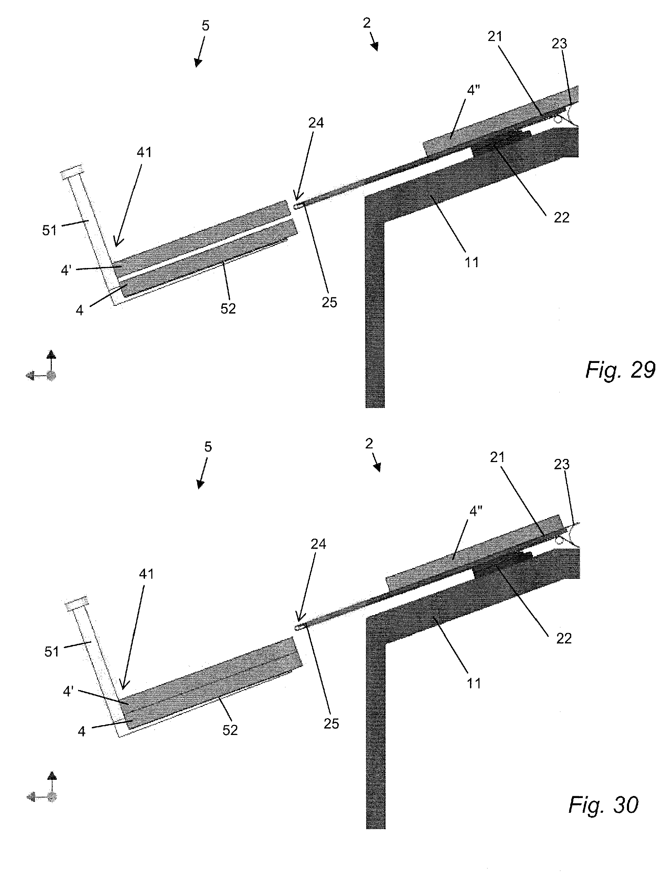

With reference to fig. 28, once the panel 4' is clear of the outlet end 24, the stacking support member 5 is once again lowered, as shown in fig. 29, i.e. moved in a direction perpendicular to the inclined conveyor surface 21 so that the new top surface is brought in alignment with or placed just underneath the conveyor surface 21, as shown in fig. 30, so that the stacking support member 5 is ready for the receipt of the next advancing panel 4".

This stacking cycle shown in the figures 17 to 30 is repeated until the stack has reached a predetermined size. When the stack building process has finished, the stacking support member 5 with the stack of panels thereon is moved away from the delivery section for further processing, as explained above.

By the invention it is realised that the method of stacking using a moveable stacking support member receiving panels from a sloping conveyor increases the stacking capacity even without the transfer member 22. However, the use of a transfer member will enable a higher capacity since the required movement of the stacking support member thereby will be reduced. Accordingly, the delivery section may alternatively be provided with one wide conveyor belt, and consequently a delivery section without support fingers, since it is realised that the support fingers are not indispensable for the object transfer.

The panels 4 are conveyed to the delivery section at a constant velocity, e.g. between 45 and 90 m/min (i.e. 0.75-1.5 m/s), and according to the invention there is provided a method and an apparatus which is versatile, compact and reliable in operation, just as it is easy in maintenance since the movement may be controlled by a robotic arm, e.g. on a standardised industrial robot. The movement of a robotic arm may be performed with great accuracy and sufficient precision in particular if the movements are kept at speeds below approx. 2 m/s. The smooth placing of the panels on the stack according to the invention is achieved since there is almost no relative velocity between the arriving panel and the stacking support member and any panels already piled up in a stack thereon. A certain relative velocity may be accepted, e.g. due to accelerations in connection with reversal of direction of movements of for instance the stacking support member and the transfer member. However, any relative velocity between the panels and the moving members in the stacking process should preferably be kept below 20-25 m/min, i.e. 0.3-0.4 m/s, in order to ensure a satisfactory stacking result.

The above embodiments of the invention are described in relation to the manufacture and stacking of fibrous insulation panels, such as stone wool products. It is realised that the method and apparatus according to the invention may be used for other types of panels or generally flat, stackable objects, such as glass wool and other fibrous products. Depending on the specific objects, the velocities discussed above may vary due to specific material characteristics of the stackable objects, such as density, friction, brittleness, bending resistance, etc.

## Claims

1. A method for stacking stackable objects, in particular stacking panels (4, 4', 4", 4"', 4"") of fibrous insulation, such as mineral wool, said method comprising the steps of:
supplying stackable objects sequentially from conveyor means (1) to a delivery section conveyor (2) having a conveyor surface (21), said objects being supplied at a predetermined object supply velocity in an object movement direction;
transferring objects to a moveable stack building support member (5) comprising a support surface (52) and an end support (51) substantially perpendicular to the stack support surface (52) for building a stack of objects on the support surface;
reciprocating the stack building support member (5) at least substantially in the direction of movement of the objects between
a) an initial object receiving position where the support surface (52) is at least partially underneath the delivery section so that the delivery section overlaps the support surface, to
b) an object transferred position where the support surface and the at least one object thereon is clear of the delivery section,
whereby at least one object is received on the support surface at the initial object receiving position and then abuts the end support (51) and whereby the stack building support member (5) is moved away from the delivery section at a velocity substantially similar to the object supply velocity at least when the at least one object abuts the end section.

2. A method according to claim 1, whereby the conveyor surface (21) is sloping towards the outlet end (24) of the delivery section (2).

3. A method according to claim 1 or 2, whereby the stack building support member is lowered a predetermined distance after having finished receiving the at least one object in the object transferred position before being returned to the initial object receiving position.

4. A method according to claim 3, whereby said predetermined distance is at least equal to the thickness of the objects to be stacked.

5. A method according to any of the preceding claims, whereby after having received a predetermined number of objects, the stack building support member is moved to a receiving station of a take-away conveyor for transporting the stacked objects to further processing, such as packaging.

6. A method according to any of the preceding claims, whereby at least two stack building support members (5, 5') are provided so that a second stack building support member (5') is provided in an active stack building object receiving position when the first building support member (5) is moving a finished stack to further processing.

7. A method according to any of the preceding claims, whereby the at least one stack building support member is mounted on a robotic arm.

8. A method according to any of the preceding claims, whereby the support surface (52) is provided by a plurality of substantially parallel spaced apart support elongated members having an extension substantially in the object movement direction.

9. A method according to any of the preceding claims, whereby the delivery conveyor comprises a plurality of substantially parallel spaced apart delivery conveyor belts, such as rubber belts or bands.

10. A method according to any of the preceding claims, whereby the object is assisted by reciprocating object transfer means following the object from the delivery section and intermediately supporting the object for a predetermined distance beyond the outlet end of the delivery section.

11. An apparatus for stacking stackable objects, in particular stacking panels (4, 4', 4", 4"', 4"") of fibrous insulation, such as mineral wool, said apparatus comprising:
means for supplying stackable objects sequentially from conveyor means (1), said objects being supplied at a predetermined object supply velocity in an object movement direction;
a delivery section conveyor (2) having a conveyor surface (21) having an inlet adapted to receiving the supplied objects and an outlet end at where the objects are delivered;
a moveable stack building support member (5) comprising a support surface (52) and an end support (51) substantially perpendicular to the stack support surface (52) for building a stack of objects on the support surface,
movement control means for reciprocating the moveable stack building support member (5) in a predetermined stacking cycle, said stacking cycle comprising reciprocating the moveable stack building support member at least substantially in the direction of movement of the objects between
a) a first position, which is an initial object receiving position where the support surface (52) is at least partially underneath the delivery section so that the delivery section overlaps the support surface, to
b) a second position, which is an object transferred position where the support surface and the at least one object thereon is clear of the delivery section.

12. An apparatus according to claim 11, wherein the at least one object is received on the support surface at the initial object receiving position and then at least prior to making contact with the end support (51) the stack building support member (5) is moved away from the delivery section at a velocity substantially similar to the object supply velocity at least when the at least one object makes contact with the end section.

13. An apparatus according to claim 11 or 12, wherein the conveyor surface (21) is inclined towards the outlet of the delivery section, preferably with an angular inclination below 60° and more preferably between 5° and 40°.

14. An apparatus according to claim 13, wherein the inclination angle is fixed.

15. An apparatus according to claim 13, wherein the inclination angle is adjustable.

16. An apparatus according to any of claims 11 to 15, wherein the movement control means for controlling the stacking cycle further comprise means for lowering the stack building support member a predetermined distance after having finished receiving the at least one object in the object transferred position before being returned to the initial object receiving position.

17. An apparatus according to claim 16, wherein said predetermined distance is at least equal to the thickness of the objects to be stacked.

18. An apparatus according to any of claims 11 to 17, wherein the movement control means further comprises means adapted for moving the stack building support member to a receiving station of a take-away conveyor for transporting the stacked objects to further processing, such as packaging.

19. An apparatus according to any of claims 11 to 18, wherein the stack building support member is mounted on a robotic arm.

20. An apparatus according to any of claims 11 to 19, wherein at least two stack building support members (5, 5') are provided so that a second stack building support member (5') is provided in an active stack building object receiving position when the first building support member (5) is moving a finished stack to further processing.

21. An apparatus according to claim 20, wherein the first stack building support member is controlled by first movement control means including a first robotic arm and the second stack building support member is controlled by second movement control means including a second robotic arm.

22. An apparatus according to any of claims 11 to 21, wherein the support surface (52) is provided by a plurality of substantially parallel spaced apart support elongated members having an extension substantially in the object movement direction.

23. An apparatus according to any of claims 11 to 22, wherein the delivery conveyor comprises a plurality of substantially parallel spaced apart delivery conveyor belts, such as rubber belts.

24. An apparatus according to any of claims 11 to 23, wherein the object is assisted by reciprocating object transfer means adapted to support the object from the delivery section and intermediately supporting the object for a predetermined distance beyond the outlet end of the delivery section.
